# FASCICULE DE BREVET EUROPEEN

(11) **EP 2 591 158 B1**
(45) Date de publication et mention de la délivrance du brevet: **13.04.2022**
(21) Numéro de dépôt: 11728638.5
(22) Date de dépôt: 30.06.2011
(51) Int. Cl.: D04H 13/00, B32B 5/26, B32B 5/28

(54) **PREFORME SOUPLE POUR LA PRODUCTION D'UNE PIECE A BASE DE FIBRES NATURELLES**
FLEXIBLER VORFORMLING ZUR HERSTELLUNG EINES FORMTEILS AUS NATURFASERN
FLEXIBLE PREFORM FOR MANUFACTURING A PRODUCT MADE OF NATURAL FIBRES

(30) Priorité: 07.07.2010 FR 1055545
(43) Date de publication de la demande: 15.05.2013
(73) Titulaire: Societe Holding Depestele, 76690 Cleres (FR)
(72) Inventeur: DEPESTELE, Marc, F-76890 Biville-La-Baignarde (FR)
(74) Mandataire: Lebkiri, Alexandre
(86) Numéro de dépôt international: PCT/EP2011/061074
(87) Numéro de publication internationale: WO 2012/004193

(56) Documents cités:
- EP-A1- 0 765 738
- WO-A1-2005/105435
- WO-A2-03/091006
- WO-A2-2004/011300
- US-A- 2 791 529

## Description

### Domaine de l'invention

La présente invention concerne le domaine de la fabrication de pièces rigides à base de fibres naturelles, et plus particulièrement de fibres végétales, préférentiellement de fibres de lin.

### Etat de la technique

L'utilisation de fibres naturelles, végétales et de fibres de lin pour la réalisation de matériaux tels que des plaques ou des pièces de garnitures pour l'automobile est connue.

La demande de brevet internationale WO03091006 décrit un matériau composite comprenant des matières fibreuses obtenues à partir de fibres naturelles telles que du lin, et une résine thermoplastique. Le procédé décrit prévoit la fabrication à l'aide d'une filière. Il comprend des étapes de séparation de la tige et de sa capsule, d'alignement des tiges suivant la ligne de fabrication du produit, de séparation des fibres et du bois contenu dans la tige, et une étape d'imprégnation des fibres avec une résine jouant le rôle de matrice pour un conditionnement sous forme de fil ou de ruban souple.

Le brevet français FR2781492 décrit un matériau thermoplastique composite contenant des fibres d'origine végétale et une matrice polypropylène.

La demande de brevet internationale WOOO/005294 décrit un matériau thermoplastique composite comprenant un en mélange une matière thermoplastique et des fibres de chanvre d'une longueur inférieure ou égal à 0,2 mm.

Le brevet britannique GB2418643 décrit un matériau constitué par une couche épaisse d'un matériau thermoformé de fibres associé à une couche de microfibres agrégées.

Le brevet chinois CN 101491947 décrit un procédé de fabrication d'un matériau composite, en particulier un procédé de fabrication d'un tissu de chanvre renforcé pour former une plaque en matériau composite destinée à l'industrie automobile. Le matériau comprend des fibres de chanvre ainsi qu'un mélange de résine époxy et de polyamide formant un agent de durcissement, ainsi qu'un diluant.

Le brevet britannique GB2460215 décrit un matériau d'emballage biodégradable laminé constitué par une couche de fibres naturelles et une couche à base de latex.

Le brevet EP0671259 décrit un matériau multicouche laminé pour réaliser un revêtement interne pour véhicules automobiles, constitué par un support et une couche externe décorative. Le support est constitué d'une couche formant noyau, à base de fibres naturelles et de couches de revêtement laminées.

Le document de brevet EP 0 765 738 A1 décrit une structure moulée solide non souple et son procédé de fabrication.

### Inconvénients de l'état de la technique

Les différentes solutions proposées dans l'art antérieur présentent un premier inconvénient concernant la mise en œuvre industrielle.

Elles impliquent toutes la réalisation sur un même site des étapes de transformation des fibres naturelles et de traitement pour la réalisation du produit final, impliquant des outillages et compétences industrielles très différents de ceux requis pour la transformation des fibres naturelles.

Les étapes de transformation des fibres naturelles sont de préférence mise en œuvre à proximité du lieu de culture et de récolte des fibres, pour éviter le transport de matériaux végétaux volumineux et sensibles aux intempéries.

Les étapes de préparation des produits industriels sont plus avantageusement mises en œuvre dans des ateliers et unités de production spécifiques à l'application visée.

Par ailleurs, les procédés de l'art antérieur ne permettent pas d'optimiser les caractéristiques mécaniques des pièces, notamment en ajustant les qualités de résistance, d'isolation phonique et thermique, et d'état de surface en fonction de l'usage visé.

### Solution apportée par l'invention

La présente invention vise à remédier à ces inconvénients en proposant en premier lieu une préforme constituant un matériau semi-fini pour la préparation, sur un site et à un moment différents, de pièces industrielles dont les propriétés sont adaptées à un usage spécifique.

A cet effet, l'invention concerne selon son acception la plus générale une préforme souple pour la production par chauffage et mise en forme d'une pièce à base de fibres naturelles, ladite préforme étant caractérisée en ce qu'elle est constituée par une âme constituée par un non-tissé de fibres naturelles, dont une surface au moins est liée à un tissu de fibres naturelles, l'âme ne contenant pas de résine visant à durcir les fibres.

Cette préforme peut être préparée sous forme de rouleaux ou de nappes livrées sur le site de fabrication des pièces finales.

Avantageusement, ledit tissu est constitué de nappes de fibres naturelles entrecroisées, non tordues. Dans l'art antérieur, il est habituel de tordre les fibres pour former des fils qui sont ensuite assemblés. La torsion, même modérée, fragilise les fibres et diminue les performances de la mêche. Pour éviter cette perte de qualité mécanique des fibres, l'invention consiste à mettre en œuvre des rubans de fibres alignées, sans torsion.

Selon une première variante, la préforme selon l'invention est constituée d'une âme liée sur une seule face seulement audit tissu de fibres naturelles.

Cette préforme permet de réaliser ensuite des pièces présentant une surface lisse et rigide, et une surface éventuellement duveteuse.

Selon une deuxième variante, la préforme est constituée d'au moins une âme dont les deux surfaces sont liées audit tissu de fibres naturelles.

Cette variante permet de réaliser des pièces ou des panneaux dont les deux surfaces externes sont formées de peaux rigides et lisses, avec une âme plus ou moins compactée permettant d'ajuster l'isolation phonique et thermique ainsi que le poids surfacique.

Selon un mode de réalisation préféré, lesdites fibres naturelles sont des fibres de lin.

Des exemples de fibres naturelles sont des fibres végétales de chanvre, de sisal, d'orties, de kenaf.

Selon une variante particulière de réalisation, le tissu comprend des matériaux thermoplastiques.

Des exemples de matériaux thermoplastiques sont des fibres d'acide polylactique, de polypropylène, de polyamide co-mêlées avec lesdites fibres naturelles.

D'autres exemples de matériaux thermoplastiques sont des poudres d'acide polylactique, de polypropylène, polyamide réparties sur lesdites fibres naturelles.

Selon un autre mode de réalisation, l'âme de non-tissé et les tissus sont liés par aiguilletage.

Selon un autre mode de réalisation, l'âme de non-tissé et les tissus sont liés par une liaison thermique.

Avantageusement, l'épaisseur de l'âme est comprise entre 4 millimètres et 10 centimètres.

L'invention concerne également un procédé de production d'une pièce à base de fibres naturelles, caractérisé en ce que l'on procède au chauffage et au compactage de la préforme selon l'invention.

Le chauffage et le compactage sont réalisés par un moule, ou par une membrane et un moyen de mise en dépression ou par une calandreuse.

De préférence, la pression est supérieure à 1 bar et la température comprise entre 160°C et 270°C.

Selon une variante préférée, le procédé selon l'invention ne comporte pas d'étape d'extraction de la pectine.

L'invention concerne également une pièce à base de fibres naturelles constituée par chauffage et compactage d'une préforme constituée par une âme constituée par un non-tissé de fibres naturelles, dont une surface au moins est liée à un tissu de fibres naturelles.

Avantageusement, ladite pièce est produite à partir d'une préforme constituée par une âme dont une seule surface est revêtue d'un tissu, pour une application d'emballage.

De préférence, elle est produite à partir d'une préforme constituée par une âme dont les deux surfaces principales sont revêtue d'un tissu, pour une application d'élément structurel, notamment pour l'automobile ou le bâtiment.

### Description détaillée d'un exemple de réalisation non limitatif

L'invention sera mieux comprise à la lecture de la description qui suit, concernant un exemple non limitatif de réalisation, illustré par les dessins annexés où :

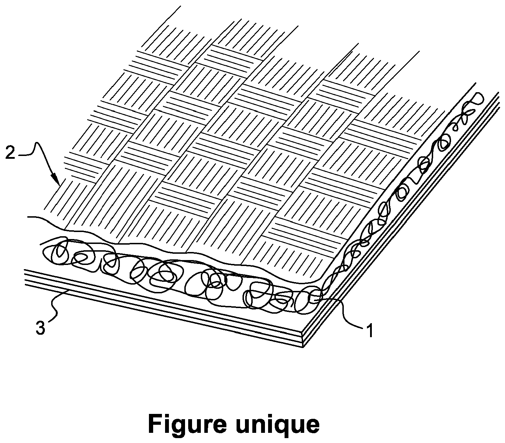

- la figure 1 représente une vue en coupe d'une préforme selon l'invention.

La préforme selon l'exemple décrit est constitué d'une nappe (1) de non-tissé de fibres de lin compris entre deux nappes (2, 3) de tissu de fibres de lin.

La nappe de non-tissé (1) est constituée par un matelas de fibres de lin non coupées, d'une longueur d'environ un mètre. Selon la finalité visée, cette nappe peut être constituée exclusivement de fibres de lin, ou d'un mélange associant des fibres de lin et des fibres de polypropylène, ou encore à base d'acide polylactique (PLA) de maïs ou betteraves.

Elle présente une épaisseur de quelques centimètres, par exemple entre 1 et 10 centimètres.

Les deux nappes tissées (2, 3) sont constituées par des entrelacements de rubans de fibres de lin non coupées, alignées parallèlement entre elles, d'une largeur de quelques millimètres. Elles peuvent également associer d'autres fibres telles que des fibres de polypropylène, ou encore à base d'acide polylactique (PLA). Les fibres ne sont pas soumises à une torsion afin de conserver les qualités mécaniques des fibres longues.

La liaison entre la nappe non-tissée (1) et les nappes tissées (2, 3) est réalisée par aiguilletage.

La préforme peut être stockée et expédiée sous forme de rouleaux.

Elle est utilisée pour fabriquer des plaques ou des pièces de forme quelconque. Il est possible de former des courbures avec des rayons faibles. Les fibres de lin glissent alors les unes par rapport aux autres, parallèlement entre elles.

L'ensemble est ensuite mouillé avec une solution aqueuse, de l'eau ou de la vapeur d'eau afin de dissoudre la pectine entourant les fibres de lin. Le chauffage active la dissolution et provoque ensuite l'évaporation de l'eau, ce qui conduit la pectine à se reconfigurer pour lier les fibres constituant les nappes de tissé (2, 3) et de non tissé (1). L'ensemble est mis sous pression à des pressions comprises entre 1 et 15 bars, ce qui produit un compactage de l'ensemble.

Les plaques ou pièces ainsi produites à partir des préformes selon l'invention constitue des pièces solides permettant de réaliser des garnitures pour des véhicules automobiles, ferroviaires ou nautiques, des emballages, des tablettes de rayonnage ou des matériaux de construction ou d'ameublement.

Le moule peut présenter des nervures appliquant un rainurage de la pièce, permettant ainsi de réaliser des charnières sans accessoire ajouté. Le but est de former le tissu en laissant une bande non polymérisée au milieu pour faire une charnière

## Revendications

1. - Préforme souple pour la production par chauffage et mise en forme d'une pièce à base de fibres naturelles, ladite préforme étant **caractérisée en ce qu'**elle est constituée par une âme constituée par un non-tissé de fibres naturelles, dont une surface au moins est liée à un tissu de fibres naturelles, l'âme ne contenant pas de résine visant à durcir les fibres.

2. - Préforme selon la revendication 1 **caractérisée en ce que** ledit tissu est constitué de nappes de fibres naturelles entrecroisées, non tordues.

3. - Préforme selon la revendication 1 ou 2 **caractérisée en ce qu'**elle est constituée d'une âme liée sur une seule face seulement audit tissu de fibres naturelles.

4. - Préforme selon la revendication 1 ou 2 **caractérisée en ce qu'**elle est constituée d'une âme dont les deux surfaces sont liées audit tissu de fibres naturelles.

5. - Préforme selon l'une quelconque des revendications précédentes **caractérisée en ce que** lesdites fibres naturelles sont des fibres de lin.

6. - Préforme selon l'une quelconque des revendications précédentes **caractérisée en ce que** le tissu comprend des matériaux thermoplastiques.

7. - Préforme selon l'une quelconque des revendications précédentes **caractérisée en ce que** l'âme de non-tissé et les tissus sont liés par aiguilletage.

8. - Préforme selon l'une quelconque des revendications 1 à 6 **caractérisée en ce que** l'âme de non-tissé et les tissus sont liés par une liaison thermique.

9. - Préforme selon l'une quelconque des revendications précédentes **caractérisée en ce que** l'épaisseur de l'âme est comprise entre 4 millimètres et 10 centimètres.

10. - Procédé de production d'une pièce à base de fibres naturelles, **caractérisé en ce que** l'on procède au chauffage et au compactage d'une préforme selon la revendication 1 constituée par une âme constituée par un non-tissé de fibres naturelles, dont une surface au moins est liée à un tissu de fibres naturelles.

11. - Procédé de production d'une pièce à base de fibres naturelles selon la revendication précédente, **caractérisé en ce que** la pression est supérieure à 1 bar et la température comprise entre 160°C et 270°C.

12. - Procédé de production d'une pièce à base de fibres naturelles selon l'une quelconque des revendications 10 à 11, **caractérisé en ce qu'**il ne comporte pas d'étape d'extraction de la pectine.

13. - Pièce à base de fibres naturelles constituée par chauffage et compactage d'une préforme selon la revendication 1 constituée par une âme constituée par un non-tissé de fibres naturelles, dont une surface au moins est liée à un tissu de fibres naturelles.

14. - Pièce selon la revendication précédente **caractérisée en ce qu'**elle est produite à partir d'une préforme constituée par une âme dont une seule surface est revêtue d'un tissu, pour une application d'emballage.

15. - Pièce selon la revendication 13 **caractérisée en ce qu'**elle est produite à partir d'une préforme constituée par une âme dont les deux surfaces principales sont revêtue d'un tissu, pour une application d'élément structurel, notamment pour l'automobile ou le bâtiment.

## Patentansprüche

1. Biegsame Vorform für die Herstellung eines Stücks auf Naturfaserbasis per Erhitzen und Abformen, wobei die genannte Vorform **dadurch gekennzeichnet ist, dass** sie aus einem Kern gebildet ist, der aus einem Vlies aus Naturfasern gebildet ist, bei dem wenigstens eine Oberfläche mit einem Naturfaserstoff verbunden ist, wobei der Kern kein zum Härten der Fasern bestimmtes Harz enthält.

2. Vorform gemäß Anspruch 1, **dadurch gekennzeichnet, dass** der genannte Stoff aus nicht verdrehten, gitterartigen Naturfaserschichten gebildet ist.

3. Vorform gemäß Anspruch 1 oder 2, **dadurch gekennzeichnet, dass** sie aus einem Kern gebildet ist, der nur auf einer Seite mit dem genannten Naturfaserstoff verbunden ist.

4. Vorform gemäß Anspruch 1 oder 2, **dadurch gekennzeichnet, dass** sie aus einem Kern gebildet ist, dessen beide Oberflächen mit dem genannten Naturfaserstoff verbunden sind.

5. Vorform gemäß irgendeinem der voranstehenden Ansprüche, **dadurch gekennzeichnet, dass** die genannten Naturfasern Leinenfasern sind.

6. Vorform gemäß irgendeinem der voranstehenden Ansprüche, **dadurch gekennzeichnet, dass** der Stoff thermoplastische Materialien umfasst.

7. Vorform gemäß irgendeinem der voranstehenden Ansprüche, **dadurch gekennzeichnet, dass** der Kern aus Vlies und die Stoffe per Vernadelung verbunden sind.

8. Vorform gemäß irgendeinem der Ansprüche 1 bis 6, **dadurch gekennzeichnet, dass** der Kern aus Vlies und die Stoffe durch eine thermische Verbindung verbunden sind.

9. Vorform gemäß irgendeinem der voranstehenden Ansprüche, **dadurch gekennzeichnet, dass** die Dicke des Kerns zwischen 4 Millimetern und 10 Zentimetern inbegriffen ist.

10. Herstellungsverfahren eines Stücks auf Naturfaserbasis, **dadurch gekennzeichnet, dass** das Erhitzen und das Kompaktieren einer Vorform gemäß Anspruch 1 vorgenommen wird, die aus einem Kern gebildet wird, der aus einem Vlies aus Naturfasern gebildet wird, dessen wenigstens eine Oberfläche mit einem Naturfaserstoff verbunden ist.

11. Herstellungsverfahren eines Stücks auf Naturfaserbasis gemäß dem voranstehenden Anspruch, **dadurch gekennzeichnet, dass** der Druck höher ist als 1 bar und die Temperatur zwischen 160 °C und 270 °C inbegriffen ist.

12. Herstellungsverfahren eines Stücks auf Naturfaserbasis gemäß irgendeinem der Ansprüche 10 bis 11, **dadurch gekennzeichnet, dass** es keinen Extraktionsschritt des Pektins umfasst.

13. Stück auf Naturfaserbasis, das per Erhitzen und Kompaktieren einer Vorform gemäß Anspruch 1 gebildet ist, die durch einen Kern gebildet ist, der durch ein Vlies aus Naturfasern gebildet ist, dessen wenigstens eine Oberfläche mit einem Naturfaserstoff verbunden ist.

14. Stück gemäß dem voranstehenden Anspruch, **dadurch gekennzeichnet, dass** es ausgehend von einer Vorform hergestellt ist, die durch einen Kern gebildet ist, bei dem für eine Verpackungsanwendung nur eine Oberfläche mit einem Stoff beschichtet ist.

15. Stück gemäß Anspruch 13, **dadurch gekennzeichnet, dass** es ausgehend von einer Vorform hergestellt ist, die durch einen Kern gebildet ist, dessen zwei Hauptoberflächen für eine Strukturelement-Anwendung, insbesondere für ein Automobil oder Gebäude, mit einem Stoff beschichtet sind.

## Claims

1. A flexible preform for producing, by heating and shaping, a part based on natural fibers, said preform being **characterized in that** it is constituted of a core made of a nonwoven of natural fibers, at least one surface of which is bonded to a woven fabric made of natural fibers, the core does not contain a resin to harden the fibers.

2. The preform according to claim 1 **characterized in that** said woven fabric is constituted of webs of natural interwoven fibers that are untwisted.

3. The preform according to claim 1 or 2 **characterized in that** the preform is constituted of a core bonded on a single face only to said natural fiber woven fabric.

4. The preform according to claim 1 or 2 **characterized in that** the preform is constituted of a core, the two surfaces of which are bonded to said natural fiber woven fabric.

5. The preform according to any one of the previous claims **characterized in that** said natural fibers are flax fibers.

6. The preform according to any one of the previous claims **characterized in that** the woven fabric comprises thermoplastic materials.

7. The preform according to any one of the previous claims **characterized in that** the core made of a nonwoven and the woven fabrics are bonded by needling.

8. The preform according to any one of claims 1 to 8 **characterized in that** the core made of a nonwoven and the woven fabrics are bonded by thermal processing bonding.

9. The preform according to any one of the previous claims **characterized in that** the thickness of the core is between 4 millimeters and 10 centimeters.

10. A method to produce a part based on natural fibers, **characterized in that** a preform according to claim 1, constituted of a core made of a nonwoven of natural fibers, at least one surface of which is bonded to a woven fabric made of natural fibers, is heated and compacted.

11. The method to produce a part based on natural fibers according to previous claim, **characterized in that** the pressure is greater than 1 bar and the temperature is between 160°C and 270°C.

12. The method to produce a part based on natural fibers according to any one of claims 10 to 11, **characterized in that** the method does not comprise a pectin extraction step.

13. A part based on natural fibers made by heating and compacting a preform according to claim 1, constituted of a core made of a nonwoven made of natural fibers, at least one surface of which is bonded to a natural fiber woven fabric.

14. The part according to the previous claim **characterized in that** the part is produced from a preform constituted of a core, a single surface of which is covered by a woven fabric, for a packaging application.

15. The part according to claim 13, **characterized in that** the part is produced from a preform constituted of a core, the two main surfaces of which are covered by a woven fabric, for a structural element application, particularly for automobiles or buildings.
